# EUROPÄISCHE PATENTANMELDUNG

(11) **EP 0 683 005 A1**
(43) Veröffentlichungstag der Anmeldung: **22.11.1995**
(21) Anmeldenummer: 95104519.4
(22) Anmeldetag: 28.03.1995
(51) Int. Cl.: B23D 47/04, B27G 19/02, F16P 3/20

(54) **Werkstückhaltevorrichtung für Unterflur-Zugkreissägen**

(30) Priorität: 18.05.1994 DE 9408198 U
(71) Anmelder: Kellner, Rudolf, D-84453 Mühldorf (DE)
(72) Erfinder: Kellner, Rudolf, D-84453 Mühldorf (DE)
(74) Vertreter: Seidel, Herta, Dipl.-Phys.

(57) **Zusammenfassung**

Eine zur Unfallverhütung dienende Vorrichtung für Unterflur-Zugkreissägen umfaßt einen einarmigen Hebel (4), der in einem ersten Halteblock (5), der seinerseits an einem Rand eines Sägetisches (1) der Zugkreissäge (2) befestigbar ist, in einer vertikal verlaufenden Ebene schwenkbar gehalten ist und der auf seiner, dem Sägetisch (1) zugewandten Unterseite eine zumindest gegenüber seiner einen Seitenkante (9a,29a) zurückgesetzte, parallel zu dieser verlaufende Längsanschlagleiste (9,29) trägt, die dazu dient, das auf den Sägetisch (1) gelegte Werkstück (39 bei abgesenktem Hebelarm (4) so zu halten, daß der durch die Zugbewegung des rotierenden Sägeblattes längs des im Sägetisch vorgesehenen Schneidspaltes erzielbare Schnittverlauf längs der Außenkante (9,29a) der Längsanschlagleiste (9,29) unter dem Hebelarm (4) erfolgt.

Die Unterseite der Längsanschlagleiste (9,29) ist mit einem aus rutschfestem, elastischem Material bestehenden Haftbelag (11) versehen. Die Betätigung der Kreissäge kann erst nach Schliessen des Stromkreises durch die beiden Schalter (36,37) erfolgen.

## Beschreibung

Die Erfindung betrifft eine Vorrichtung für Unterflur-Zugkreissägen, die zum Schneiden von Holz- und Holzverbundmaterial oder von Metallprofilen eingesetzt werden.

Zugkreissägen werden vorrangig am Bau verwendet, um an Ort und Stelle z.B. die für Parkettböden, Paneele, Holzverkleidungen etc. benötigten Hölzer bzw. Metallprofile maßgerecht zuschneiden zu können.

Zwar sind solche Zugkreissägen mit Schutzhauben ausgestattet, die die Hand der Bedienungsperson vor einer Berührung mit dem rotierenden Sägeblatt schützen, doch macht es die Forderung nach einer ganz exakten Schnittführung immer wieder erforderlich, das zu schneidende Werkstück in unmittelbarer Nähe des durch den Tischspalt gezogenen Sägeblattes zu halten, so daß es bedauerlicher Weise trotz aller Vorsichtsmaßnahmen immer wieder zu Unfällen und schwerwiegenden Verletzungen der Hand kommt.

Der Erfindung liegt daher die Aufgabe zugrunde, eine Vorrichtung zu schaffen, die es ermöglicht, einerseits die Schnittführung genau festzulegen und andererseits das Werkstück in der gewünschten Lage auf dem Sägetisch festzuhalten, während das Sägeblatt in dem Spalt des Sägetisches entlanggezogen wird.

Erfindungsgemäß wird diese Aufgabe durch eine Vorrichtung gelöst, die gekennzeichnet ist durch einen einarmigen Hebel, der in einem ersten Halteblock, der seinerseits an einem Randbereich eines Sägetisches der Zugkreissäge befestigbar ist, in einer vertikal verlaufenden Ebene schwenkbar gehalten ist und der auf seiner, dem Sägetisch zugewandten Unterseite eine zumindest gegenüber seiner einen Seitenkante zurückgesetzte, parallel zu dieser verlaufende Längsanschlagleiste trägt, die dazu dient, das auf den Sägetisch gelegte Werkstück bei abgesenktem Hebelarm so zu halten, daß der durch die Zugbewegung des rotierenden Sägeblattes längs des im Sägetisch vorgesehenen Schneidspaltes erzielbare Schnittverlauf längs der Außenkante der Längsanschlagleiste unter dem Hebelarm erfolgt.

Die erfindungsgemäße Vorrichtung bietet für den Arbeiter einen größtmöglichen Schutz gegen Verletzungen. Mit seiner einen Hand muß der Arbeiter den Hebelarm nach unten auf das Werkstück drücken, damit dieses sich nicht aus seiner für den gewünschten Schnitt erforderlichen Lage verschieben kann. Mit der anderen Hand wird das rotierende Sägeblatt durch den Spalt des Sägetisches gezogen. Es bleibt daher keine Möglichkeit, während des Arbeitsvorganges in den Bereich der rotierenden Kreissäge zu gelangen. Aber auch nicht mit dem Sägevorgang befaßte Personen können, während ein anderer Sägeschnitte durchführt, nicht in den Bereich des Sägeblattes eingreifen, da der Hebelarm der erfindungsgemäßen Vorrichtung den gesamten Führungsspalt der Kreissäge in dem Sägetisch überdeckt.

Gemäß einer vorzugsweisen Ausbildung der erfindungsgemäßen Vorrichtung ist der einarmige Hebel an seinem freien Ende in eine Kreisscheibe erweitert, die eine längs des Kreisumfanges verlaufende Führung (Nut, Falz oder dergleichen) aufweist. Ferner ist entsprechend einer weiteren vorzugsweisen Ausbildung der Erfindung auf der dem Sägetisch zugewandten Unterseite des Hebelarmes im Bereich der Kreisscheibe eine Queranschlagleiste vorgesehen, auf der eine Doppelringschiene in einer im Abstand zur Fläche der Queranschlagleiste parallel verlaufenden Ebene so befestigt ist, daß sich die Anschlagkante der Queranschlagleiste mit dem Durchmesser der Ringschienen deckt und eine Ringschiene in der Führung der Kreisscheibe geführt ist, wodurch eine Verschwenkung der Queranschlagleiste relativ zum Hebelarm um die extra durch den Mittelpunkt der Kreisscheibe verlaufende gedachte Symmetrieachse ermöglicht wird.

Mit Hilfe der Queranschlagleiste ist es möglich, winkelgenaue, exakt übereinstimmende Parkettstäbe zuzuschneiden, ohne daß für die Hand der Bedienungsperson die Gefahr einer Verletzung besteht.

Um aber sicher zu sein, daß die erfindungsgemäße Vorrichtung den Schneidspalt exakt überdeckt, wenn der Sägevorgang beginnt, ist gemäß einer vorzugsweisen Ausbildung der Erfindung an den beiden Enden des sich über den gesamten Hebelarm erstreckenden Handgriffs je ein Schalter vorgesehen. Die beiden Schalter sind hintereinander geschaltet und in den Stromkreis der Kreissäge eingebaut. Der eine dieser beiden Schalter kann von Hand eingeschaltet werden, aber erst wenn der Hebelarm genau über den Schneidspalt des Sägetisches ausgerichtet ist, wird auch der zweite Schalter durch den Hebelarm betätigt und der Stromkreis geschlossen. Das heißt aber mit anderen Worten, nur bei erreichter genauer Abdeckung des Schneidspaltes beginnt die Kreissäge zu arbeiten.

Weitere vorzugsweise Merkmale der erfindungsgemäßen Vorrichtung ergeben sich aus den Unteransprüchen sowie aus der nachstehenden Beschreibung von Ausführungsbeispielen anhand der Zeichnung.

Hierin zeigen
- Fig. 1: eine Seitenansicht der erfindungsgemäßen Vorrichtung, die an dem Sägetisch einer Unterflur-Zugkreissäge befestigt ist,
- Fig.1a: die in Fig. 1 gezeigte Vorrichtung ohne Sägetisch,
- Fig. 2: die Vorrichtung nach Fig.1 von oben gesehen,
- Fig.2a: die in Fig. 1a gezeigte Vorrichtung von oben gesehen,
- Fig. 3: eine Draufsicht auf den Hebelarm ohne Handgriff,
- Fig. 4: eine Draufsicht auf die Queranschlagleiste mit kreissektorförmigem Ausschnitt,
- Fig. 5: eine Draufsicht auf die Queranschlagleiste mit kreisförmiger Ringschiene und Skala,
- Fig. 6: eine Seitenansicht einer weiteren vorteilhaften Ausbildung der Vorrichtung für Unterflur-Zugkreissägen,
- Fig. 7: eine Draufsicht auf die in Fig. 6 gezeigte Ausbildung der erfindungsgemäßen Vorrichtung,
- Fig. 8: eine Draufsicht auf den Hebelarm ohne Handgriff der Vorrichtung nach den Fig. 6 und 7,
- Fig. 9: eine Draufsicht auf die Queranschlagleiste der Vorrichtung nach Fig. 6,
- Fig.10: eine Draufsicht auf die Queranschlagleiste mit darauf befestigter Ringschiene und
- Fig.11: ein Querschnittsbild der in den Fig. 6 bis 10 dargestellten erfindungsgemäßen Vorrichtung längs der Linie A.....A.

Sich entsprechende Teile der einzelnen Figuren sind mit übereinstimmenden Bezugszeichen gekennzeichnet.

Eine Unterflur-Zugkreissäge ist ein mobiles Handwerksgerät, das von den Handwerkern an den Ort ihrer Tätigkeit mitgeführt werden kann. Es umfaßt einen auf einem leichten Gestell montierten Sägetisch 1 mit einem in der Tischmittelachse verlaufenden Längsspalt 1a, in dem ein motorbetriebenes Kreissägeblatt 2 von Hand vom einen Tischende zum anderen Tischende gezogen werden kann, während ein Werkstück 3 von Hand auf dem Tisch 1 so gehalten wird, daß sich die zuvor angerissene gewünschte Schnittstelle genau über dem Spalt befindet, damit der Schnitt beim Ziehen des Kreissägeblattes wunschgemäß erfolgen kann.

Beim Verlegen von Parkettböden ist es erforderlich, zahlreiche winkelgenaue, längenmäßig exakte Parkettstäbe zuzuschneiden, die den örtlichen Gegebenheiten anzupassen sind. Das gleiche gilt für den Zuschnitt von Mosaikparkett, dessen Handhabung bei den herkömmlichen Kreissägen besonders gefahrvoll ist, wenn genaue Teilstücke benötigt werden.

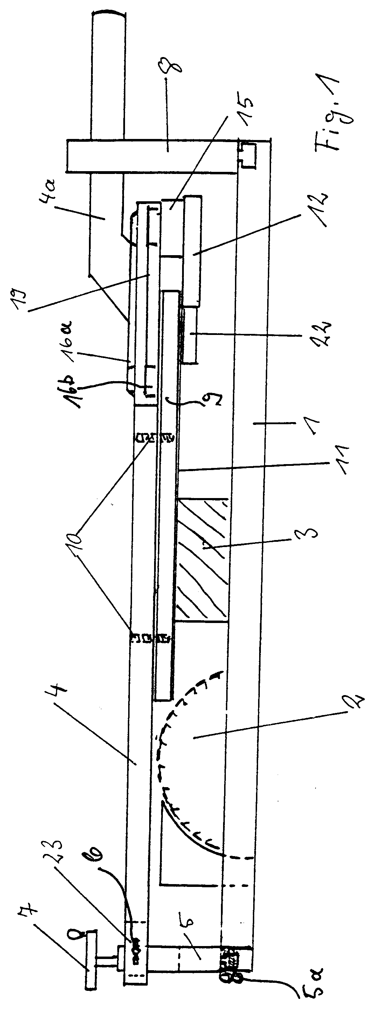

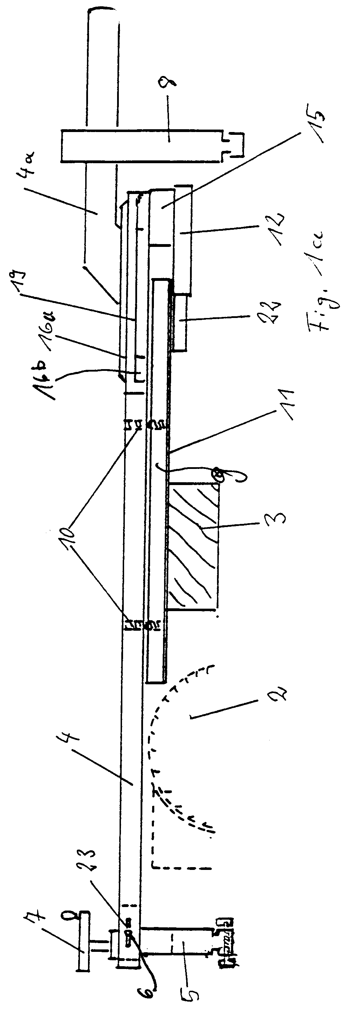

Eine große Erleichterung und Sicherheit für die Bedienungsperson bietet daher die erfindungsgemäße Vorrichtung, die wie aus Fig. 1 zu erkennen, einen einarmigen Hebel 4 umfaßt, der in einem Halteblock 5 um eine waagerecht verlaufende Querachse 6 in einer vertikalen Ebene schwenkbar ist. Die Querachse 6 liegt in einem Längsspalt 23, der eine Längenänderung des Hebelarmes 4 zuläßt. Der Halteblock 5 ist am Sägetisch 1 mit Schrauben 5a festgeschraubt.An seinem freien Ende ist der Hebelarm 4 mit einem Handgriff 4a versehen, an dem eine Bedienungsperson den Hebelarm 4 anheben kann, um ein zu bearbeitendes Werkstück 3 unter den Hebelarm 4 schieben zu können. Der Hebelarm 4 verläuft vom einen Rand des Sägetisches 1 bis zu seinem gegenüberliegenden Rand. Er verdeckt den im Sägetisch 1 vorgesehenen Spalt 1a für das Sägeblatt 2. Das heißt, die Seitenkante 4b des Hebelarmes 4 verläuft in einem geringen seitlichen Abstand, parallel zu dem im Sägetisch 1 vorliegenden Spalt 1a. Damit überdeckt der Hebelarm 4 den Kreissägenspalt 1a und die Kreissäge vollständig, es ist also keine Schutzhaube für das Sägeblatt 2 erforderlich, wie dies bei den herkömmlichen Unterflur-Zugkreissägen notwendig ist und deshalb auch gefordert wird.

Der Hebelarm 4 ist abhängig von der Stärke des jeweils zu bearbeitenden Werkstückes in seiner Höhe verstellbar. Dies geschieht durch Änderung der Höhe des Halteblockes 5 mittels einer von Hand bedienbaren Kurbelwelle 7.

Zur Arretierung des Hebelarmes 4 ist im Bereich des Handgriffes 4a auf dem Sägetisch 1 ein weiterer Halteblock 8 angeschraubt, der sich gabelförmig für die Aufnahme des Handgriffes 4a nach oben erweitert.

An der Unterseite des Hebelarmes 4 ist eine Anschlagleiste 9 vorgesehen, deren eine Seitenkante 9a parallel zu der Seitenkante 4b des Hebelarmes 4, aber von dieser geringfügig zurückgesetzt, verläuft. Sie liegt benachbart zum Spalt 1a und dient als Anschlag für das zu schneidende Werkstück 3. Die Seitenkante 9a der Anschlagleiste 9 verläuft exakt neben dem Spalt im Sägetisch 1. Die Anschlagleiste 9 ist an dem Hebelarm 4 mittels Federn 10 federnd verschraubt. Die Bedienungsperson hat nun die Aufgabe, den auf dem Werkstück 3 angerissenen Schnittverlauf exakt unter die Seitenlängskante 9a der Anschlagleiste 9 zu schieben. Dann kann der Hebel 4 von Hand auf das Werkstück 3 heruntergedrückt werden. Die Anschlagleiste 9 trägt auf ihrer Unterseite einen Haftbelag 11 aus einem rutschfesten elastischen Material. Das Werkstück 3 wird mittels des Haftbelages 11 so gut an der gewünschten Stelle auf dem Tisch 1 gehalten , daß die Bedienungsperson mit ihrer freien Hand das Sägeblatt 3 längs des Spaltes 1a über die Länge des Sägetisches 1 ziehen und dabei das Werkstück 3 durch das genau neben der Seitenkante 9a der Anschlagleiste 9 in dem Spalt geführte Sägeblatt 2 an der gewünschten Stelle durchschneiden kann.

Im Ausführungsbeispiel ist die Anschlagleiste 9 höhenverstellbar am Hebelarm 4 befestigt, um Werkstücke unterschiedlicher Stärke bearbeiten zu können. Es ist aber auch möglich, entsprechend der unterschiedlichen Stärke des Werkstückes 3 bemessene Anschlagleisten 9 untereinander auszuwechseln.

Beim Verlegen von Parkettböden stellt sich für den Verleger häufig die Aufgabe, sämtliche Parkettstäbe in einem genauen übereinstimmenden Winkel zuzuschneiden. Dieser Winkel kann bestimmt werden und an eine weitere Anschlagleiste des Hebelarmes 4 übertragen werden. Diese Anschlagleiste ist als Queranschlagleiste 12 ausgebildet.

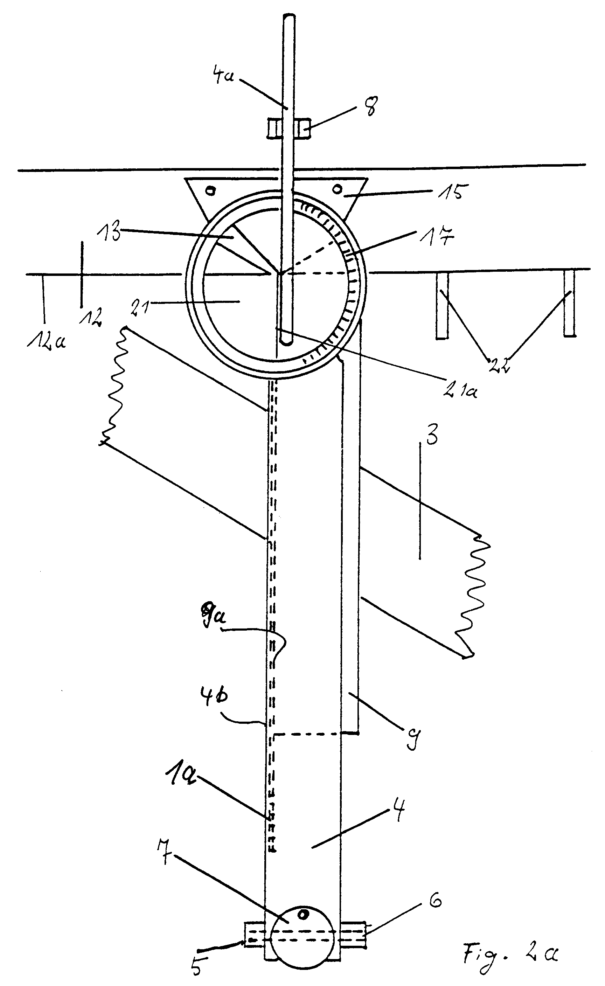

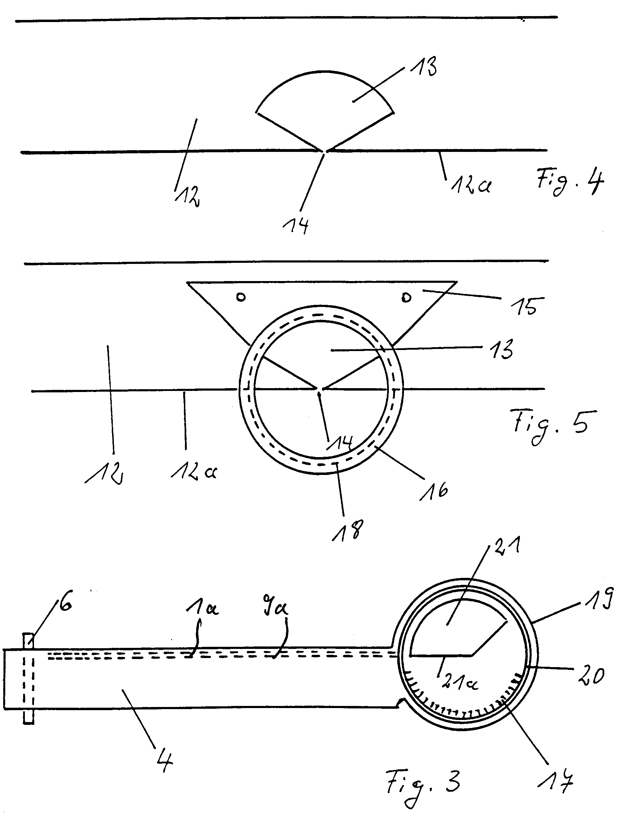

Die Queranschlagleiste 12 ist, wie aus Fig. 4 zu erkennen, mit einem kreissektorförmigen Auschnitt 13 versehen. Im Bereich des Scheitelpunktes des Kreissektors 13 ist die Außenkante, die als Anschlagkante 12a der Queranschlagleiste 12 dient, mit einem schmalen Spalt 14 versehen. Die Queranschlagleiste 12 trägt einen auf einem Halteklotz 15 befestigten Doppelkreisring 16 a,b. Der Halteklotz 15 ist so bemessen, daß er nicht in den Kreissektor 13 hineinragt. Der Halteklotz 15 mit den beiden in einem Abstand voneinander übereinanderliegenden Ringen 16 a,b ist so auf der Queranschlagleiste 12 befestigt, daß die Anschlagkante 12a der Queranschlagleiste 12 genau unter dem Durchmesser der Kreisringe 16 a,b verläuft.

Der Kreisring 16 a ist auf seiner Unterseite mit einer ringförmigen Laufschiene 18 versehen.

Der Hebelarm 4 ist an seinem freien Ende zu einer Kreisscheibe 19 erweitert. Längs des Umfanges der Kreisscheibe 19 verläuft eine ringförmige Führungsnut 20. Der Durchmesser des Kreises der Führungsnut 20 entspricht exakt demjenigen der Laufschiene 18 des Kreisrings 16a. Die Kreisscheibe 19 ist ebenfalls mit einem kreissektorförmigen Ausschnitt 21 versehen, der als Durchsichtsöffnung auf den Sägetisch 1 dient, damit die Bedienungsperson den Schnittverlauf des Sägeblatts im Werkstück beobachten kann. Der eine Radius 21a des Ausschnittes 21 fluchtet mit der Seitenkante 9a der seitlichen Anschlagleiste 9. Außerdem trägt die Kreisscheibe 19 auf ihrer Oberseite eine Skaleneinteilung 17.

Wird der Hebelarm 4 mit der Queranschlagleiste 12 vereinigt, so kommt die am freien Ende des Hebelarmes 4 befindliche Kreisscheibe 19 zwischen die an der Queranschlagleiste 12 und den Halteklotz 15 befestigten Kreisringe 16a,b. Die auf der der Kreisscheibe 19 zugewandten Fläche des Kreisringes 16a vorgesehene Laufschiene 18 fügt sich dann in die Führungsnut 20 der Kreisscheibe 19 ein. Die Queranschlagleiste 12 kann gegenüber dem Hebelarm 12 verschwenkt werden, indem die Laufschiene 18 in der Führungsnut 20 entlanggleitet. Auf der Skaleneinteilung 17 der Kreisscheibe 19 läßt sich die Winkelstellung der Queranschlagleiste 12 relativ zum Hebelarm 4 bestimmen.

Die gedachte Drehachse der Queranschlagleiste 12 verläuft genau durch den Spalt 14. Da der Radius 21a unmittelbar neben dem im Sägetisch 1 vorgesehenen Spalt 1a für das Kreissägeblatt2 verläuft, kann die Bedienungsperson den Schnittverlauf im Werkstück 3 bis zum Spalt 14 der Queranschlagleiste 12 genau beobachten.

Durch die Maßnahme eines eng begrenzten Spaltes 14 wird aber gleichzeitig erreicht, daß auch sehr kurze Werkstücke 3 ohne Verletzung der Hand oder ohne Anschlagsgefahr vom Sägeblatt durchschnitten werden können.

Um nun mehrere Parkettstäbe mit übereinstimmendem Schnittwinkel schneiden zu können, hat die Bedienungsperson nur noch die Werkstücke 3 an die Queranschlagleiste 12 anzulegen, die in der Ringführung,gebildet aus Nut 20 und Laufschiene 18, um den gewünschten Winkel, wie aus der Skaleneinteilung 17 erkennbar, zum Hebelarm 4 verschwenkt wurde und das Sägeblatt zu sich hinzuziehen.

Der Parkettstab kann wiederholt durch Verschieben längs der Queranschlagleiste 12 in Abschnitte gewünschter Länge durchschnitten werden. Hierzu sind an der Queranschlagleiste 12 Anschlagsmarkierungen in Form von Vorsprüngen 22 vorgesehen.

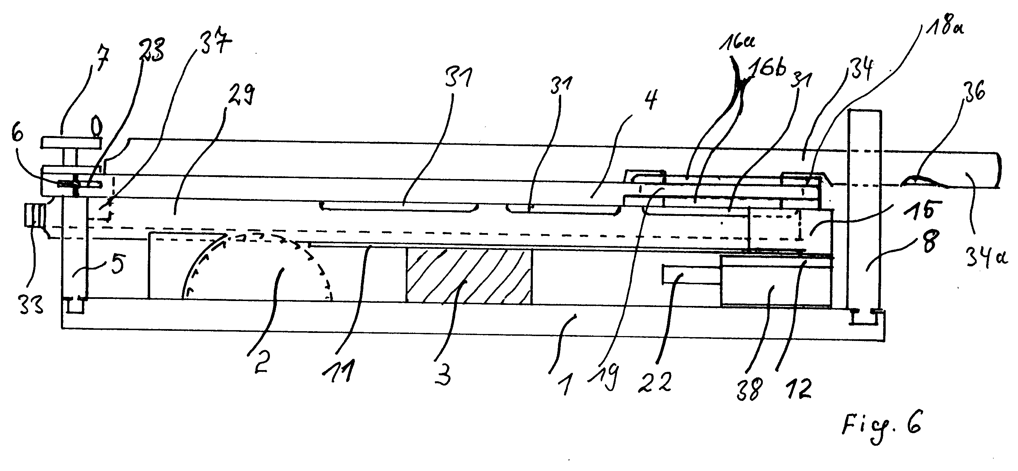

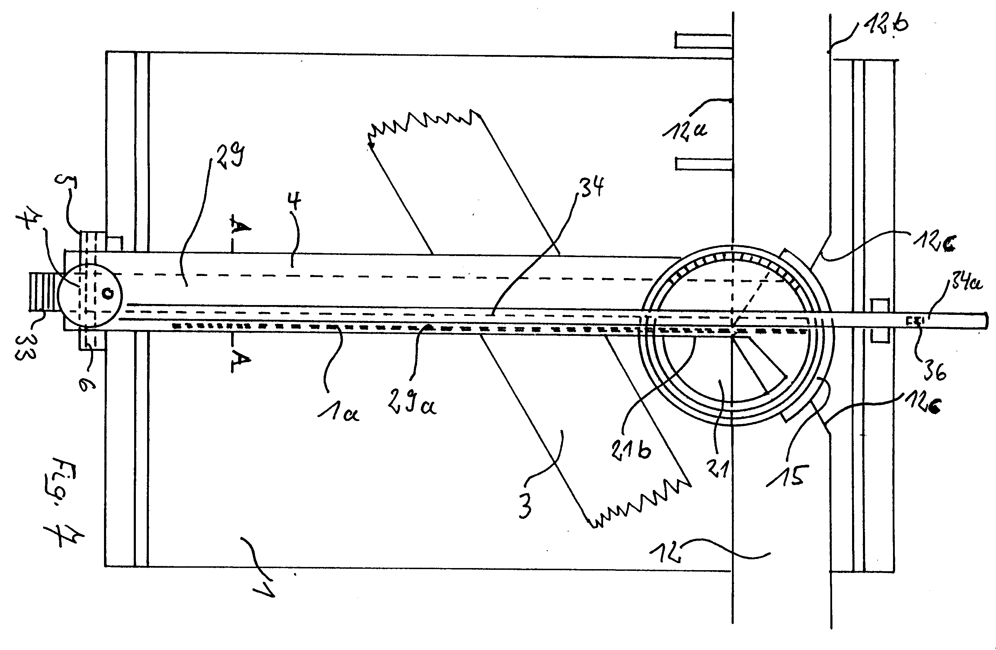

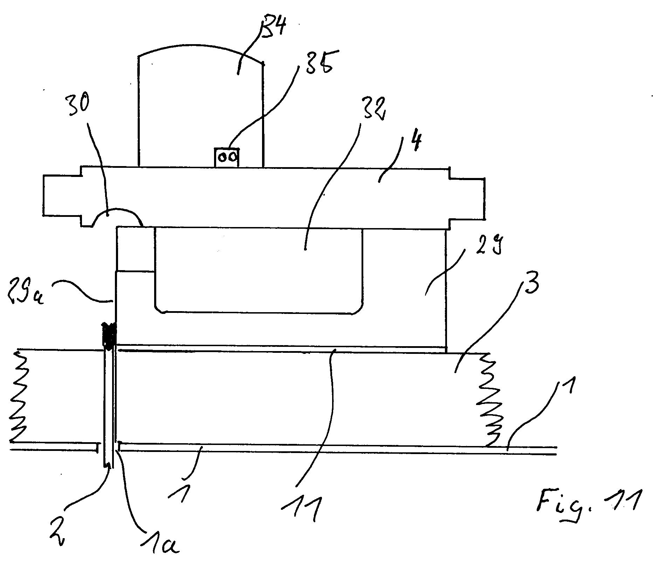

In den Fig. 6 bis 11 ist eine weitere, verbesserte Ausbildung der erfindungsgemäßen Vorrichtung für Unterflur-Zugkreissägen dargestellt.

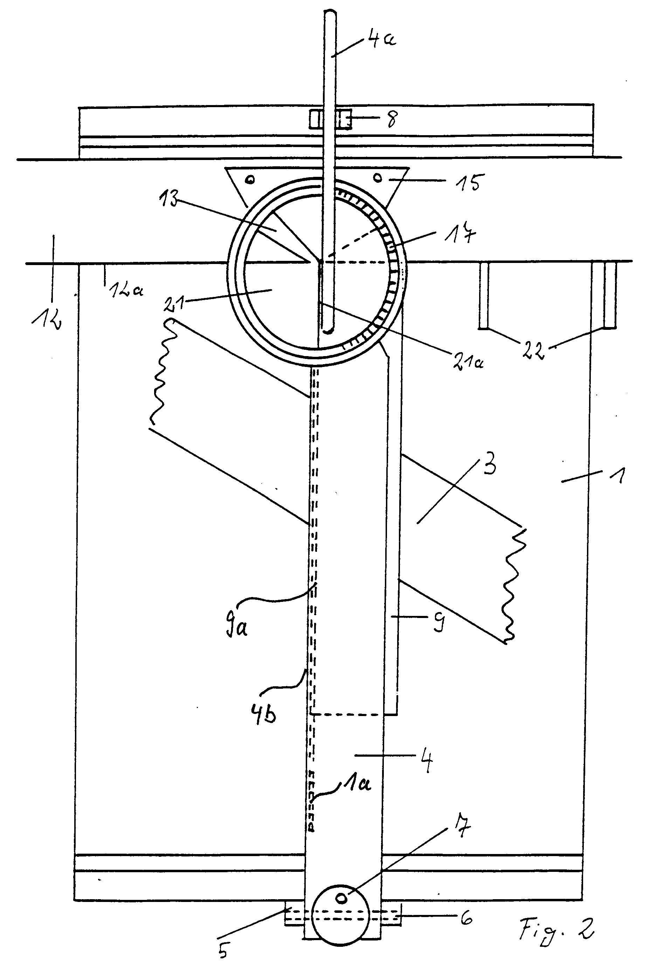

In den Figuren sind die den im ersten Ausführungsbeispiel nach den Figuren 1 bis 5 verwendeten Bauteilen entsprechenden Bauteile mit übereinstimmenden Bezugszeichen gekennzeichnet.

Die verbesserte Ausbildung der erfindungsgemäßen Vorrichtung weist noch weitere Sicherheiten für die Bedienungsperson auf und erleichtert darüber hinaus eine genaue Arbeitsweise, insbesondere für den Zuschnitt von Mosaikparkett.

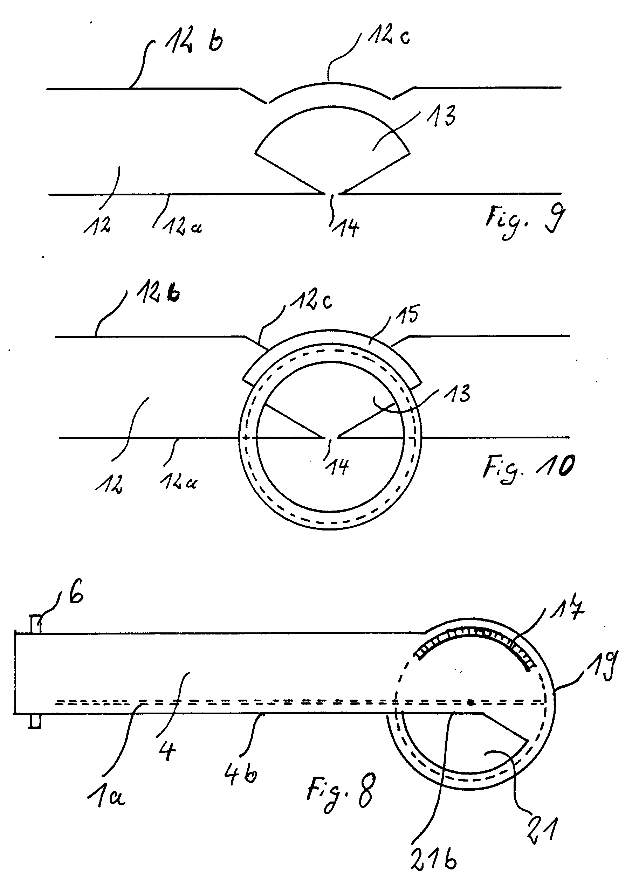

Zunächst sei darauf hingewiesen, daß der Kreisausschnitt 21 nach Fig. 3 etwas abgewandelt wurde. Die Begrenzungskante 21a fluchtet nach Fig. 8 nicht mehr mit der Außenkante 9a der Anschlagleiste 9, sondern verläuft in Fortsetzung der Seitenkante 4b des Hebels 4 und ist mit dem Bezugszeichen 21b gekennzeichnet. Hierdurch wird erreicht, daß auch innerhalb des Ausschnittes 21 der kreisförmigen Erweiterung des Hebels 4 der Sägespalt 1a durch den Hebel 4 vollständig abgedeckt ist und auch noch die letzte Gefahr für die Bedienungsperson beseitigt ist.

Ferner ist die Queranschlagleiste 12 längs ihrer, der Kante 12a gegenüberliegenden Kante 12b im Bereich des kreissektorförmigen Ausschnittes 13 mit einer Ausnehmung 12c versehen, um die Schwenkbewegung des Hebels 4 nicht zu behindern. Entsprechend ist auch die Form des Halteklotzes 15 im Bereich der Ausnehmung 12c abgerundet worden.

An Stelle von Doppelkreisringen 16 a,b, mit einer ringförmigen Laufschiene 18 sind die Kreisringe 16 a,b mit einem halbkreisförmigen Abstandstück 16 miteinander verbunden, dessen Innendurchmesser etwas kleiner als der Durchmesser der Kreisringe 16 a,b, gewählt ist. Hierdurch wird ein Falz 18a gebildet, der als Führung für die Außenkante der Kreisscheibe 19 dient. Die Skaleneinteilung 17 ist auf dem oben liegenden Kreisring 16a angebracht. Es handelt sich somit um eine alternative Ausbildungsform, die lediglich als Beispiel dafür dienen soll, daß auch andere technisch äquivalente Lösungen wählbar sind.

Von größerer Bedeutung ist aber eine Verbesserung, die sich auf die Entfernung der beim Sägevorgang anfallenden Sägespäne bezieht. Wie aus Fig. 6 erkennbar, ist die Anschlagleiste 9 nach den Fig. 1 bis 5 durch eine Anschlagrinne 29 ersetzt, die über die gesamte Länge des Hebelarmes 4 verläuft und nach oben hin von dem Hebelarm 4 abgedeckt ist. Die untere Außenfläche der Anschlagrinne 29 trägt ebenfalls einen Filzbelag 11, mit dem der Hebelarm 4 auf das auf dem Sägetisch 1 liegende Werkstück 3 drückt. Die Seitenkante 29a der Anschlagrinne 29 verläuft exakt neben dem Spalt 1a des Sägetisches 1. Der Hebelarm 4 ragt beidseitig über die Anschlagrinne 29 hinaus. Auf der Unterseite des Hebelarmes 4 verläuft längs des sich über dem Spalt 1a befindlichen Bereichs eine Längsnut 30, die als Fangnut für die beim Sägevorgang wegfliegenden Sägespäne dient. In Abständen voneinander sind im Bereich des oberen Randes der Anschlagrinne 29 längliche Ausnehmungen 31 vorgesehen, die als Eintrittsöffnungen für die Sägespäne in den Kanal 32 der Anschlagrinne 29 dienen. An dem im Bereich des Halteklotzes 5 befindlichen Ende der Anschlagrinne 29 ist ein Schlauchanschlußstutzen 33 vorgesehen, an den ein Schlauch einer Absaugvorrichtung (nicht dargestellt) angeschlossen werden kann. Sobald die Kreissäge 2 in Betrieb genommen wird, wird auch die Absaugvorrichtung eingeschaltet. Die anfallenden Sägespäne werden dann durch die, Ausnehmungen 31 in den Kanal 32 der Anschlagrinne 29 eingesaugt und an die Absaugvorrichtung abgeleitet.

Wie aus Fig. 6 zu ersehen, ist im vorliegenden Ausführungsbeispiel der Handgriff 4a der Ausbildung nach Fig. 1 bis 5 als eine über die gesamte Länge des Hebelarmes 4 verlaufende Leiste 34 ausgebildet, die bis zum Halteklotz 5 reicht. In der Leiste 34 verläuft ein Kabelkanal 35 für Leitungen, die zwei Schalter 36 und 37 miteinander verbinden.

Der Schalter 36 befindet sich im Bereich des Handgriffes 34a der Leiste 34 und wird von Hand betätigt. Der Schalter 37 ist im Bereich des Halteklotzes 5 angebracht. Der Schalter 37 wird durch den Hebelarm 4 betätigt, aber erst dann, wenn die exakte Ausrichtung der Anschlagrinne 29 parallel zum Sägespalt 1a erreicht ist. Erst dann, wenn beide hintereinandergeschalteten Schalter 36 und 37 betätigt sind, wird der Stromkreis, in dem auch die Kreissäge 2 liegt, geschlossen und der Sägevorgang kann beginnen. Es ist also gewährleistet, daß erst nach vollkommener Abdeckung des Sägespaltes 1a die Tätigkeit der Kreissäge 2 beginnen kann.

Aus Fig. 6 ist ferner zu entnehmen, daß der Queranschlag 12 nach Fig. 1 bis 5 wesentlich dünner ausgebildet ist, aber mit einer Aufdoppelung 38 kombiniert werden kann, wenn es sich darum handelt, besonders dünne Sperrholzplatten, z.B. Mosaikparkett zu schneiden. Die Anschlagstücke 22 können in diesem Fall an der Aufdoppelung 38 angeordnet sein

## Patentansprüche

1. Vorrichtung für Unterflur-Zugkreissägen, die zum Schneiden von Holz- und Holzverbundmaterial oder von Metallprofilen eingesetzt werden, **gekennzeichnet durch** einen einarmigen Hebel (4), der in einem ersten Halteblock (5), der seinerseits an einem Randbereich eines Sägetisches (1) der Zugkreissäge (2) befestigbar ist, in einer vertikal verlaufenden Ebene schwenkbar gehalten ist und der auf seiner, dem Sägetisch (1) zugewandten Unterseite eine zumindest gegenüber seiner einen Seitenkante (9a, 29a) zurückgesetzte, parallel zu dieser verlaufende Längsanschlagleiste (9, 29) trägt, die dazu dient, das auf den Sägetisch (1) gelegte Werkstück (3) bei abgesenktem Hebelarm (4) so zu halten, daß der durch die Zugbewegung des rotierenden Sägeblattes längs des im Sägetisch (1) vorgesehenen Schneidspaltes (1a) erzielbare Schnittverlauf längs der Außenkante (9,29a) der Längsanschlagleiste (9,29a) unter dem Hebelarm (4) erfolgt.

2. Vorrichtung nach Anspruch 1, **dadurch gekennzeichnet**, daß die Längsanschlagleiste (9,29) höhenverstellbar ist.

3. Vorrichtung nach Anspruch 1 oder 2, **dadurch gekennzeichnet**, daß die Unterseite der Längsanschlagleiste (9,29) mit einem aus rutschfestem, elastischem Material bestehenden Haftbelag (11) versehen ist.

4. Vorrichtung nach einem der Ansprüche 1 bis 3, **dadurch gekennzeichnet**, daß für die Arretierung des Hebelarmes (4) in seiner auf den Sägetisch (2) abgesenkten Stellung ein zweiter Halteblock (8) vorgesehen ist.

5. Vorrichtung nach einem der vorhergehenden Ansprüche, **dadurch gekennzeichnet**, daß der zweite Halteblock (8) für die Aufnahme eines am freien Ende des Hebelarmes (4,34) vorgesehenen Handgriffes (4a, 34a) gabelförmig ausgebildet und am Sägetisch (1) befestigt ist, um den Handgriff des Hebelarmes in seiner auf den Sägetisch abgesenkten Stellung zu umgreifen.

6. Vorrichtung nach einem der vorhergehenden Ansprüche, **dadurch gekennzeichnet**, daß sich der einarmige Hebel (4) an seinem freien Ende in eine Kreisscheibe (19) erweitert.

7. Vorrichtung nach einem der vorhergehenden Ansprüche, **dadurch gekennzeichnet**, daß die Kreisscheibe (19) auf ihrer dem Sägetisch (1) abgewandten Oberfläche eine längs des Kreisumfanges verlaufende Führungsnut (20) aufweist.

8. Vorrichtung nach einem der vorhergehenden Ansprüche, **dadurch gekennzeichnet**, daß in der Kreisscheibe (19) ein als Durchsichtsöffnung auf den Sägetisch dienender etwa kreissektorförmiger Ausschnitt (21) vorgesehen ist, dessen eine Begrenzungskante (21a) mit der Außenkante der Längsanschlagleiste (9) fluchtet.

9. Vorrichtung nach einem der vorhergehenden Ansprüche, **dadurch gekennzeichnet**, daß in der Kreisscheibe (19) ein etwa kreissektorförmiger Ausschnitt (21) vorgesehen ist, dessen eine Begrenzungskante (21b) mit der Außenkante (4b) des Hebelarmes (4) fluchtet.

10. Vorrichtung nach einem der vorhergehenden Ansprüche, **dadurch gekennzeichnet**, daß der Handgriff (4a, 34a) des Hebelarmes (4) auf der Kreisscheibe (19) angeordnet ist, so daß die Bedienungsperson den Hebelarm während der Arbeitsphase auf das auf dem Sägetisch (1) liegende Werkstück (3) drücken und dort festhalten kann.

11. Vorrichtung nach einem der vorhergehenden Ansprüche,**dadurch gekennzeichnet**, daß auf der dem Sägetisch (1) zugewandten Unterseite des Hebelarmes (4) im Bereich der Kreisscheibe (19) eine Queranschlagleiste (12) vorgesehen ist, auf der eine Doppelringschiene (16a,b) so befestigt ist, daß sie in einer im Abstand zur Fläche der Queranschlagleiste (12) parallel verlaufenden Ebene liegt und sich die Anschlagkante (12a) der Anschlagleiste (12) mit dem Durchmesser der Ringschienen (16a,b) deckt und daß ferner eine Ringschiene (16a,b) in die Führungsnut (20) der Kreisscheibe (19) eingreift und die Verschwenkung der Queranschlagleiste (12) relativ zum Hebelarm (4 ) um die etwa durch den Mittelpunkt der Kreisscheibe (19) verlaufende gedachte Symmetrieachse erfolgt.

12. Vorrichtung nach einem der vorhergehenden Ansprüche,**dadurch gekennzeichnet**, daß die Führung der Kreisscheibe über einen Falz (18a), gebildet in den Ringschienen (16a,b),erfolgt.

13. Vorrichtung nach einem der vorhergehenden Ansprüche,**dadurch gekennzeichnet**, daß die Kreisscheibe (19) mit einer Skaleneinteilung (17) versehen ist.

14. Vorrichtung nach einem der vorhergehenden Ansprüche,**dadurch gekennzeichnet**, daß die Skaleneinteilung (17) auf einer Ringschiene (16a) angeordnet ist.

15. Vorrichtung nach einem der vorhergehenden Ansprüche,**dadurch gekennzeichnet**, daß die Queranschlagleiste (12) mit einem kreissektorförmigen Ausschnitt (13) versehen ist, dessen Mittelpunkt in der gedachten Symmetriemittelachse der Kreisscheibe (19)liegt, wobei der den Mittelpunkt umgebende Bereich der Queranschlagleiste (12) zu einem engen, etwa der Breite des Sägeblattes entsprechenden Spalt (14) erweitert ist.

16. Vorrichtung nach einem der vorhergehenden Ansprüche,**dadurch gekennzeichnet**, daß auf der Queranschlagleiste (12) oder auf einer Verdoppelung (38) der Queranschlagleiste (12) ein oder mehrere, vorzugsweise verstellbare, Vorsprünge (22) als Längenanschlagsmarkierungen für das zu schneidende Werkstück vorgesehen sind.

17. Vorrichtung nach einem der vorhergehenden Ansprüche,**dadurch gekennzeichnet**, daß der Hebelarm (4) verschiebbar in dem Halteblock (5) angeordnet ist.

18. Vorrichtung nach einem der vorhergehenden Ansprüche,**dadurch gekennzeichnet**, daß die Skaleneinteilung (17) der Kreisscheibe (19) in Form einer Digitalanzeige ausgebildet ist.

19. Vorrichtung nach einem der vorhergehenden Ansprüche,**dadurch gekennzeichnet**, daß die Längsanschlagleiste (29) als eine Anschlagrinne ausgebildet ist, die über die gesamte Länge des Hebelarmes (4) verläuft und nach oben von dem Hebelarm (4) zur Bildung eines Kanals (32) abgedeckt ist.

20. Vorrichtung nach einem der vorhergehenden Ansprüche,**dadurch gekennzeichnet**, daß die Längsanschlagleiste (29) im Bereich ihres oberen Randes in Abständen voneinander angeordnete, längliche Ausnehmungen (31) aufweist.

21. Vorrichtung nach einem der vorhergehenden Ansprüche,**dadurch gekennzeichnet**, daß die Längsanschlagleiste (29) an ihrem einen Ende einen Schlauchanschlußstutzen (33) trägt, der für eine Verbindung mit einer Absaugvorrichtung dient.

22. Vorrichtung nach einem der vorhergehenden Ansprüche,**dadurch gekennzeichnet**, daß der Hebelarm (4) die Längsanschlagleiste (29) seitlich überragt und auf seiner Unterseite mit einer Längsnut (30) versehen ist.

23. Vorrichtung nach einem der vorhergehenden Ansprüche,**dadurch gekennzeichnet**, daß der Handgriff des Hebelarmes (4) als eine über seine gesamte Länge verlaufende Leiste (34) ausgebildet ist, die mit einem Kabelkanal (35) versehen ist.

24. Vorrichtung nach einem der vorhergehenden Ansprüche,**dadurch gekennzeichnet**, daß der Handgriff (34) an seinen beiden Enden je einen Schalter (36,37) trägt, die hintereinander geschaltet, mit durch den Kabelkanal (35) verlaufenden Leitungen verbunden sind und mit der Kreissäge (1) in einem Stromkreis liegen.

25. Vorrichtung nach einem der vorhergehenden Ansprüche,**dadurch gekennzeichnet,** daß die Betätigung der Kreissäge (2) erst nach Schließen des Stromkreises durch die beiden Schalter (36,37) erfolgen kann.
